Europäisches Patentamt

European Patent Office

Office européen des brevets

(11) Numéro de publication: **0 337 542**
**A1**

## (12) DEMANDE DE BREVET EUROPEEN

(21) Numéro de dépôt: 89200851.7

(22) Date de dépôt: 04.04.89

(51) Int. Cl.⁴: **B32B 27/04** , **B32B 27/08** , **C08L 77/00**

(30) Priorité: 14.04.88 FR 8805064

(43) Date de publication de la demande:
18.10.89 Bulletin 89/42

(84) Etats contractants désignés:
AT BE CH DE ES GB GR IT LI LU NL SE

(71) Demandeur: PLAVINA & CIE (SOCIETE EN NOM COLLECTIF)
Rue du Prince Albert, 44
B-1050 Bruxelles(BE)

(72) Inventeur: Delcorps, Michel
Rue François Gay, 41
B-1150 Bruxelles(BE)
Inventeur: Tanche, Hans
Dijkstraat, 33
B-9700 Oudenaarde(BE)

(74) Mandataire: Bouchoms, Maurice et al
Solvay & Cie Département de la propriété
industrielle 310, rue de Ransbeek
B-1120 Bruxelles(BE)

(54) Membrane imperméable résistante aux agents chimiques et enceinte imperméable réalisée au moyen de telles membranes.

(57) La membrane comporte au moins une couche support souple en polymère contenant du chlore, au moins une couche d'adhésif constitué par un copolyamide dont le degré de cristallisation est inférieur à 20 % et une pellicule d'un polymère contenant du fluor.

EP 0 337 542 A1

## EP 0 337 542 A1

# Membrane imperméable résistante aux agents chimiques et enceinte imperméable réalisée au moyen de telles membranes

La présente invention concerne une membrane imperméable de structure multicouche qui résiste remarquablement aux attaques par des agents chimiques, ainsi qu'une enceinte imperméable réalisée par association d'une pluralité de telles membranes.

Il a déjà été proposé de réaliser des membranes ou des films imperméables à partir de polymères souples contenant du chlore tels que des polymères vinyliques, comme le polychlorure de vinyle plastifié ou des polyoléfines chlorées ou sulfochlorées ou des mélanges de ces polymères.

On a toutefois constaté que de telles membranes, lorsqu'elles sont utilisées notamment pour confectionner des enceintes isolant des décharges publiques ou industrielles des nappes d'eau phréatiques, résistent mal aux agents chimiques dégagés par les décharges et perdent rapidement leur efficacité.

On sait, par ailleurs, que les films et pellicules réalisés à partir de polymères contenant du fluor tels que notamment les homopolymères et les copolymères du fluorure de vinylidène se caractérisent par une inertie remarquable vis-à-vis de la plupart des agents chimiques.

En conséquence, pour des raisons d'économie et d'efficacité dans le temps, on a également déjà proposé de réaliser des membranes imperméables en associant une couche support souple en un polymère contenant du chlore avec au moins une mince pellicule d'un polymère contenant du fluor, le problème délicat à résoudre, dans ce cas, étant, compte tenu de l'inertie chimique des polymères contenant du fluor, d'assurer une liaison efficace et durable entre ces deux constituants.

Ainsi, dans la demande de brevet japonais 126598/81 publiée sous le n° 58029664, on divulgue un film complexe multicouche coextrudé pour applications agricoles dans lequel une fine couche de polyfluorure de vinylidène est associée avec un support constitué en polychlorure de vinyle plastifié à l'intervention d'une couche de résine acrylique.

Par ailleurs, dans la demande de brevet européen EP-A-0164766, on divulgue notamment une structure multicouche comportant une couche de polymère du fluorure de vinylidène associé à un support pouvant être en polychlorure de vinyle plastifié par l'intermédiaire d'une couche d'adhésif constitué par un copolymère d'acétate de vinyle et d'éthylène.

On a maintenant constaté que l'utilisation de certains copolyamides pour associer entre eux un support souple en un polymère contenant du chlore et une pellicule en un polymère contenant du fluor conduit à des structures présentant une résistance au délaminage encore améliorée. On constate notamment que l'adhérence entre le polymère fluoré et la couche support est suffisante pour permettre un allongement d'ensemble supérieur à l'allongement de striction du polymère fluoré seul, sans désolidarisation ni striction localisée du polymère fluoré. Il en résulte un avantage économique autorisant la pose du composite sur des soubassements déformables.

La présente invention concerne dès lors, à titre principal, une membrane imperméable comportant au moins une couche support souple en un polymère contenant du chlore, au moins une couche d'adhésif et au moins une pellicule d'un polymère contenant du fluor dans laquelle l'adhésif est constitué par un copolyamide dont le degré de cristallinité est inférieur à 20 %.

Le copolyamide utilisé comme adhésif est, de préférence, un copolyamide à base de pipérazine ou contenant du caprolactame, du laurolactame et de l'adipate d'hexaméthylène-diamine, ainsi que d'autres composants formateurs de polyamide comme constituants de base.

On préfère toutefois mettre en oeuvre un copolyamide dont la température de fusion est inférieure à 120°C, un tel copolyamide étant obtenu en choisissant les autres composants formateurs de polyamide dans le groupe formé par l'acide 1,1-amino-undécanoïque et/ou les sels d'hexaméthylène diamine avec les acides adipique, azélaïque, sébacique, dodécane-dicarboxylique et/ou undécane-dicarboxylique.

Des copolyamides convenant particulièrement sont décrits en détail dans les documents BE-A-814816, BE-A-814817, DE-A-1253449, DE-A-1595591, DE-A-2630114 et DE-A-2800149 qui sont incorporés par référence dans la présente description.

Un copolyamide convenant plus particulièrement pour la réalisation de la membrane conforme à l'invention est produit et commercialisé sous la marque commerciale PLATILON $H_2$ par la firme PLATE BONN GmbH.

Le polymère contenant du chlore exploité pour réaliser la ou les couches supports souples peut être un homopolymère ou un copolymère plastifié du chlorure de vinyle ou une polyoléfine chlorée ou sulfochlorée ou encore un mélange de ceux-ci.

Par copolymères du chlorure de vinyle, on entend un copolymère contenant au moins 50% en poids d'unités dérivées du chlorure de vinyle, le ou les comonomères copolymérisés pouvant être choisis parmi

2

les esters vinyliques, par exemple l'acétate de vinyle; les éthers vinyliques, par exemple l'éther éthylvinylique; les acides acrylique et méthacrylique et leurs esters, par exemple l'acrylate de méthyle; l'acide fumarique et ses esters, par exemple le fumarate d'éthyle; l'acide maléique, son anhydride et ses esters, par exemple le maléate d'éthyle; les composés vinylaromatiques, par exemple le styrène; les halogénures de vinylidène, par exemple le chlorure de vinylidène; l'acrylonitrile; le méthacrylonitrile; les oléfines, par exemple l'éthylène.

Dans une forme de réalisation qui est préférée, le polymère contenant du chlore est un homopolymère plastifié du chlorure de vinyle.

Par homopolymère plastifié du chlorure de vinyle, on entend un homopolymère contenant de 10 à 90 parties en poids, par 100 parties en poids d'homopolymère, d'au moins un plastifiant conventionnel du polychlorure de vinyle, ce ou ces plastifiants étant en général choisi parmi les esters de l'acide phtalique dérivés d'un alcool linéaire ou ramifié contenant de 4 à 12 atomes de carbone, tels que le dibutyl-, le dioctyl- et le diisodécylphtalate par exemple; parmi les esters de diacides aliphatiques, tels que le dioctylfumarate, le dioctyladipate et le dibutylsébacate par exemple; parmi les esters de polyols, tels que les esters du pentaérythritol et les dibenzoates de diéthylène- et de dipropylèneglycols par exemple; parmi les esters d'acides gras, tels que l'acétylricinoléate de méthyle par exemple; parmi les esters de l'acide phosphorique, tels que le tricrésyl-, le triphényl- et le trinonylphosphate par exemple; parmi les huiles époxydées, telles que les huiles de soja et de lin époxydées par exemple; parmi les esters de l'acide citrique, tels que les citrates d'acétyltrioctyle et d'acétyltributyle par exemple; parmi les plastifiants à base de polyesters, tels que le trimellitate de triméthyle, le pyromellitate de tétra-n-octyle et l'adipate de propylèneglycol par exemple, les plastifiants polymères tels que les polyadipates ou encore parmi les sulfonates de phénol et/ou de crésol tels que le pentadécane sulfonate de phénol et de crésol.

Pour des raisons d'accessibilité et de coût, le ou les plastifiants sont choisis de préférence parmi les esters de l'acide phtalique et parmi les esters de diacides aliphatiques, en particulier le dioctyl- et le diisodécylphtalate, d'une part et les dioctylfumarate et -adipate, d'autre part.

Le polymère contenant du chlore peut encore contenir d'autres additifs conventionnels pour améliorer diverses propriétés telles que la résistance aux agents atmosphériques, la stabilité ou pour faciliter sa fabrication ou réduire son coût tels que des stabilisants thermiques, des lubrifiants, des agents antistatiques, des matières de charge ou de renforcement, des agents ignifugeants, des agents fongicides, des antioxydants, des pigments, des colorants, etc.

En outre, chaque couche support souple en polymère contenant du chlore peut être éventuellement renforcée par une armature en fibres naturelles, minérales ou synthétiques, cette armature étant, de préférence, noyée dans la couche renforcée.

Le polymère contenant du fluor exploité pour réaliser chaque pellicule de la membrane conforme à l'invention peut être un homopolymère ou un copolymère du fluorure de vinyle ou de vinylidène ou du polytétrafluoréthylène, du polychlorotrifluoréthylène ou encore un copolymère d'éthylène et de tétrafluoréthylène ou de chlorotrifluoréthylène. On préfère toutefois utiliser un polymère de fluorure de vinylidène.

Par polymère du fluorure de vinylidène, on entend désigner tous les polymères contenant au moins 85% molaires et, de préférence, au moins 90% molaires d'unités monomériques dérivées du fluorure de vinylidène, le complément éventuel étant constitué, de préférence, d'unités monomériques dérivées d'autres oléfines fluorées tels que le fluorure de vinyle, le trifluoréthylène, le chlorotrifluoréthylène, le tétrafluoréthylène et l'hexafluorpropylène.

Dans le mode préférentiel de réalisation de la membrane imperméable conforme à l'invention, le polymère contenant du fluor est un homopolymère du fluorure de vinylidène.

Le polymère contenant du fluor peut également contenir des additifs usuels et notamment des agents absorbant les radiations ultraviolettes, des pigments et/ou des colorants.

La membrane imperméable peut dans une première forme de réalisation être constituée par une association successive d'une couche support souple en polymère contenant du chlore, d'une couche d'adhésif et d'une pellicule de polymère contenant du fluor. Dans ce cas, il est avantageux, ainsi qu'il sera montré plus loin, d'appliquer une couche supplémentaire d'adhésif au moins sur les bords de la face libre de la couche support souple en polymère contenant du chlore.

Pour certaines applications, la membrane imperméable conforme à l'invention peut être de structure sandwich, l'âme étant constituée par la couche support souple en polymère contenant du chlore et étant revêtue sur ses deux faces par une couche d'adhésif puis par une pellicule en polymère contenant du fluor.

Dans certains cas enfin, il peut être avantageux de réaliser une membrane imperméable comportant une couche support souple revêtue sur ses deux faces d'adhésif et pourvue en outre sur une seule face d'une pellicule en polymère contenant du fluor. Dans ce cas, la couche libre d'adhésif a pour fonction d'empêcher une migration ou exsudation du ou des plastifiants présents dans la couche support souple.

Dans la membrane imperméable conforme à l'invention, chaque couche support souple a une épaisseur comprise entre 0,1 et 3 mm et, de préférence, entre 0,3 et 2 mm, chaque couche d'adhésif a une épaisseur comprise entre 0,01 et 0,5 mm et de préférence entre 0,02 et 0,3 mm et chaque pellicule en résine contenant du fluor a une épaisseur comprise entre 0,01 et 3 mm et, de préférence, entre 0,05 et 2 mm.

Le mode de réalisation de la membrane imperméable n'est pas critique en soi.

Ainsi, la membrane peut être réalisée par coextrusion ou par laminage à chaud de ses divers constituants. Selon un autre mode de réalisation, on peut déposer une couche d'adhésif, en poudre ou en solution, sur la couche support souple puis appliquer la pellicule en polymère contenant du fluor par pressage à chaud, par exemple par passage entre des cylindres chauds.

Lors d'un assemblage à chaud entre les éléments constitutifs de la membrane, on opère généralement à une température supérieure à la température de fusion de l'adhésif mais inférieure à la température de fusion de la pellicule en polymère contenant du fluor et, de préférence, à une température comprise entre 130 et 175° C. En général, les pressions exercées pour effectuer les assemblages peuvent varier entre 0,02 et 20 bars.

Pour réaliser des enceintes imperméables au moyen de la membrane conforme à l'invention, il suffit de réussir entre elles une pluralité de membranes adjacentes, l'association pouvant être réalisée bord à bord ou par recouvrement en veillant à constituer une couche continue résistant aux attaques chimiques sur au moins une des faces de l'enceinte.

Selon un mode de réalisation avantageux qui peut être exploité avec des membranes imperméables comportant une couche support souple, une couche d'adhésif et une pellicule en polymère contenant du fluor, la face libre de la couche support étant en outre pourvue sur ses bords d'une couche d'adhésif, l'association entre les membranes adjacentes peut être réalisée par recouvrement en faisant intervenir la couche marginale d'adhésif. A cet effet, on peut utiliser les appareillages classiques de soudage tels que des appareils de soudage à air chaud en les réglant de manière à obtenir une température des faces à souder comprise entre 130 et 175° C.

La membrane conforme à l'invention est en outre illustrée par les 6 exemples de réalisation donnés ci-après et repris au tableau I.

Dans tous les exemples, on a réalisé la membrane par pressage à chaud, dans une presse, d'une couche support souple, d'une pellicule d'adhésif (PLATILON H₂) et d'une pellicule de PVDF (homopolymère de fluorure de vinylidène produit et commercialisé par SOLVAY et Cie sous la marque SOLEF® 1008).

La couche support souple dans les exemples 1 à 4 est en homopolymère plastifié du chlorure de vinyle produit et commercialisé par SOLVAY et Cie sous la marque ALKORPLAN® 35070.

La couche support souple dans l'exemple 5 est à base de polyéthylène chloré (CPE).

La couche support souple dans l'exemple 6 est en polyéthylène sulfochloré (HYPALON®).

Dans les exemples 1 à 6, la résistance au pelage a été mesurée sur un dynamomètre suivant une méthode inspirée de la norme ASTM D 1876-72, les mesures étant effectuées sur des échantillons maintenus à 23° C.

Tableau I

| EX. | IDENTIFICATION DES CONSTITUANTS ET EPAISSEUR | | T° C° | PRESSION BARS | DURÉE SECONDES | RESISTANCE AU PELAGE N/5 cm ET OBSERVATION | |
|---|---|---|---|---|---|---|---|
| 1 | PVC PLATILON $H_2$ | 1,5 mm 0,035 mm | 160 | 0,02 | 30 | 100 | la pellicule de PVDF se déchire pour une valeur plus élevée |
| | PVDF | 0,06 mm | | | | | |
| 2 | PVC PLATILON $H_2$ | 1,5 mm 0,035 mm | 163 | 0,02 | 30 | 200 | la pellicule de PVDF se déchire pour une valeur plus élevée |
| | PVDF | 0,1 mm | | | | | |
| 3 | PVC PLATILON $H_2$ | 1,5 mm 0,035 mm | 163 | 0,02 | 30 | 250 | la pellicule de PVDF se déchire pour une valeur plus élevée |
| | PVDF | 0,15 mm | | | | | |
| 4 | PVC PLATILON $H_2$ | 1,5 mm 0,035 mm | 176 | 0,02 | 30 | 120 | la pellicule de PVDF se déchire pour une valeur plus élevée |
| | PVDF | 0,15 mm | | | | | |
| 5 | CPE PLATILON PVDF | 1,5 mm 0,035 mm 0,15 mm | 163 | 0,02 | 30 | 250 | |
| 6 | HYPALON® PLATILON $H_2$ | 1 mm 0,035 mm | 165 | 0,05 | 60 | 182 | la pellicule de PVDF se déchire pour une valeur plus élevée |
| | PVDF | 0,1 mm | | | | | |

## Revendications

1 - Membrane imperméable résistante aux agents chimiques comportant au moins une couche support souple en un polymère contenant du chlore, au moins une couche d'adhésif et au moins une pellicule d'un polymère contenant du fluor, caractérisée en ce que l'adhésif est constitué par un copolyamide dont le degré de cristallinité est inférieur à 20%.

2 - Membrane imperméable selon la revendication 1, caractérisée en ce que le copolyamide est produit à partir de pipérazine ou de caprolactame, de laurolactame et d'adipate d'hexaméthylène diamine, ainsi qu'à partir d'autres composants formateurs de polyamides choisis dans le groupe formé par l'acide 1,1-amino-undécanoïque et/ou les sels d'hexaméthylène diamine avec les acides adipique, azélaïque, sébacique, dodécane-dicarboxylique et/ou undécane-dicarboxylique.

3 - Membrane imperméable selon la revendication 1, caractérisée en ce que le polymère contenant du chlore est choisi dans le groupe formé par les polymères à base de chlorure de vinyle et les polyoléfines chlorées ou sulfochlorées et leurs mélanges.

4 - Membrane imperméable selon la revendication 1, caractérisée en ce que le polymère contenant du chlore est un homopolymère plastifié du chlorure de vinyle.

5 - Membrane imperméable selon la revendication 1, caractérisée en ce que le polymère contenant du fluor est choisi dans le groupe formé par les homopolymères et les copolymères du fluorure de vinylidène.

6 - Membrane imperméable selon la revendication 1, caractérisée en ce qu'elle comporte successivement une couche en polymère contenant du chlore, une couche d'adhésif et une pellicule de polymère contenant du fluor, la face libre de la couche en polymère contenant du chlore étant, en outre, revêtue d'une couche d'adhésif au moins sur ses bords.

7 - Membrane imperméable selon la revendication 1, caractérisée en ce que chaque couche en polymère contenant du chlore est renforcée par une armature en fibres naturelles, minérales ou synthétiques.

8 - Membrane imperméable selon la revendication 1, caractérisée en ce que chaque couche en polymère contenant du chlore a une épaisseur comprise entre 0,1 et 3 mm, chaque couche d'adhésif a une épaisseur comprise entre 0,01 et 0,5 mm et chaque pellicule en polymère contenant du fluor a une épaisseur de 0,01 à 3 mm.

9 - Enceinte imperméable réalisée en associant par recouvrement partiel des membranes selon la revendication 6, caractérisée en ce que la liaison entre les membranes adjacentes est assurée par soudage à l'intervention de la couche d'adhésif présente sur la face libre de la couche en polymère contenant du chlore.

10 - Enceinte imperméable selon la revendication 9, caractérisée en ce que le soudage est effectué à une température d'interface supérieure à la température de fusion de l'adhésif mais inférieure à la température de fusion de la pellicule en polymère contenant du fluor et, de préférence, à une température comprise entre 130 et 175°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 577 564  (ATOCHEM) <br> * Revendications 1,4; page 2, ligne 18 - page 5, ligne 11 * <br> --- | 1,3-6,9 | B 32 B  27/04 <br> B 32 B  27/08 <br> C 08 L  77/00 |
| A | US-A-3 843 479  (K. MATSUNAMI) <br> * Revendications 1-4,11; colonne 1, ligne 54 - colonne 5, ligne 35 * <br> --- | 1-4 | |
| A,D | BE-A-  814 816  (PLATE BONN GmbH) <br> * Revendication 1; page 5, ligne 18 - page 6, ligne 9 * <br> ----- | 2 | |

**DOMAINES TECHNIQUES RECHERCHES (Int. Cl.4)**

B 32 B

Le présent rapport a été établi pour toutes les revendications

| Lieu de la recherche | Date d'achèvement de la recherche | Examinateur |
|---|---|---|
| LA HAYE | 19-05-1989 | BLASBAND I. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................................................
& : membre de la même famille, document correspondant